# FASCICULE DE BREVET EUROPEEN

(11) **EP 2 106 375 B1**
(45) Date de publication et mention de la délivrance du brevet: **31.07.2013**
(21) Numéro de dépôt: 07870339.4
(22) Date de dépôt: 27.11.2007
(51) Int. Cl.: B65D 85/804, A47J 31/40

(54) **CAPSULE SPHERIQUE POUR UNE MACHINE DE PREPARATION ET DE DISTRIBUTION DE BOISSONS, ET PROCEDE POUR PREPARER UNE BOISSON A PARTIR D'UNE TELLE CAPSULE**
KUGELFÖRMIGE KAPSEL ZUR VERWENDUNG IN EINER MASCHINE ZUR AUTOMATISCHEN HERSTELLUNG UND AUSGABE VON GETRÄNKEN SOWIE VERFAHREN ZUR HERSTELLUNG EINES GETRÄNKS AUS EINER SOLCHEN KAPSEL
SPHERICAL CAPSULE TO BE USED IN AN AUTOMATIC BEVERAGE PREPARATION AND DISPENSING MACHINE, AND METHOD FOR PREPARING A BEVERAGE FROM SAID CAPSULE

(30) Priorité: 28.11.2006 FR 0610402
(43) Date de publication de la demande: 07.10.2009
(73) Titulaire: Versini, Rolland, 13008 Marseille (FR)
(72) Inventeur: Versini, Rolland, 13008 Marseille (FR)
(86) Numéro de dépôt international: PCT/FR2007/001941
(87) Numéro de publication internationale: WO 2008/071878

(56) Documents cités:
- DE-U1- 29 811 729
- FR-A- 1 305 737
- FR-A- 2 879 175

## Description

### Domaine technique de l'invention.

La présente invention a pour objet une capsule sphérique destinée à être utilisée dans une machine de préparation et de distribution automatique de boissons. L'invention a également pour objet un procédé pour préparer une boisson à partir de cette capsule.

L'invention concerne le domaine technique général des capsules jetables pour la préparation de boissons, préférentiellement, mais non exclusivement pour la préparation de café, et dont le contenu à infuser reste dans l'emballage. Elle concerne plus particulièrement le domaine technique des capsules destinées à être perforées pour permettre l'injection d'eau sous pression à l'intérieur de ladite capsule. L'invention concerne également le domaine technique des procédés permettant d'infuser de telles capsules.

La « capsule » objet de l'invention est à différencier d'une « dosette » du type décrite dans le document FR 2.879.175 (LUCIANI). La capsule est pourvue d'une enveloppe de conditionnement qui sert de chambre d'infusion. Au contraire, une dosette sert uniquement à amener une quantité prédéterminée de substance à infuser dans une chambre d'infusion spécifique de la machine. Dans le cas où la dosette comporte une enveloppe de conditionnement, celle-ci sert uniquement à protéger la substance à infuser et doit être préalablement déchirée pour en extraire ladite dosette.

### État de la technique.

Les capsules et dosettes jetables sont bien connues de l'art antérieur et notamment décrites dans les documents WO 2004/006740 (SEB), WO 94/01344 (NESTLE), US 2004/0197444 (KRAFT FOOD), US 5.012.629 (KRAFT FOOD), WO 2004/087529 (HAUSBRANDT), EP 1.221.418 (MELITTA HAUSHALTSPRODUKTE), EP 1.295.554 (SGL ITALIA) ou encore EP 0.583.210 (FORNARI).

Les capsules fermées aptes à s'ouvrir par la pression de l'eau injectée sont particulièrement avantageuses car elles permettent d'obtenir des boissons de grande qualité. On connaît en particulier par le document EP 0.554.469 (NESTLE), une capsule selon le préamble de la revendication 1, destinée à être utilisée dans une machine de préparation automatique de boisson, ladite capsule étant formée par un agrégat compacté d'une substance à infuser emprisonné dans une enveloppe de conditionnement étanche à l'air et à l'eau et ayant la forme d'un tronc de cône.

Outre les raisons hygiéniques, le fait d'employer une enveloppe de conditionnement étanche à l'air et à l'eau procure l'avantage de pouvoir stocker les capsules pendant une période relativement longue sans aucune dégradation de la saveur et des arômes de la boisson. De plus, l'infusion de la boisson peut être réalisée directement à l'intérieur de la capsule, l'enveloppe de conditionnement jouant le rôle de chambre d'infusion.

Une autre caractéristique de cette capsule est que l'enveloppe de conditionnement est configurée pour se crever lors de l'injection d'eau sous pression à l'intérieur de ladite capsule. L'enveloppe de conditionnement se crève uniquement au niveau d'une zone d'affaiblissement prévue à la base du tronc de cône.

De part sa forme et sa conception, une telle capsule doit être mise en place dans la chambre d'infusion dans une position spécifique. En effet, l'infusion se fait par l'intermédiaire d'un dispositif de perçage configuré pour percer le sommet du tronc de cône et injecter de l'eau sous pression. Sous l'effet de la pression, la zone d'affaiblissement disposée à la base du tronc de cône éclate et l'eau s'infuse au travers de la capsule vers un conduit de récupération de la substance infusée.

L'inconvénient majeur de ce type de capsules est qu'elles doivent être obligatoirement positionnées de manière à ce que le sommet du tronc de cône soit en vis-à-vis du dispositif de perçage et que la zone d'affaiblissement à la base du tronc de cône soit en vis-à-vis du conduit de récupération de la substance infusée, au risque de dégrader la machine. De ce fait, il est nécessaire de prévoir des moyens pour forcer le positionnement de la capsule dans la chambre d'infusion. La conception de la machine devient complexe et il n'est pas possible de prévoir une machine équipée d'un réservoir où les capsules seraient stockées en vrac et amenées automatiquement vers la chambre d'infusion.

A ce jour, les machines utilisant de telles capsules ne peuvent pas distribuer automatiquement plusieurs boissons à la suite, ce qui les rend inutilisables dans des commerces de débit de boissons, dans des collectivités, dans les entreprises ou dans tous autres lieux où un grand nombre de boissons doivent être préparées quotidiennement.

Face aux inconvénients de l'art antérieur et en particulier ceux des capsules décrites dans EP 0.554.469 (NESTLE), le problème technique principal que vise à résoudre l'invention est de proposer une capsule selon la revendication 1, utilisable dans n'importe quelle position dans une machine pour la préparation et la distribution automatique de boissons équipée d'un dispositif pour percer l'enveloppe de la capsule et injecter de l'eau sous pression à l'intérieur de ladite capsule. Une caractéristique particulièrement avantageuse de la capsule objet de l'invention est qu'elle ne nécessite aucun pré-positionnement dans la chambre d'infusion de ladite machine.

L'invention a encore pour but de proposer un procédé selon la revendication 12, particulièrement simple à mettre en oeuvre pour préparer une boisson à partir de la capsule.

Un autre but de l'invention est de proposer une capsule apte à être stockée en vrac dans un réservoir relié à la chambre d'infusion de la machine.

L'invention a encore pour but de proposer une capsule de conception simple, peu onéreuse et apte à conserver dans des conditions optimales la qualité de la substance à infuser.

### Divulgation de l'invention.

La solution proposée par l'invention est une capsule du type décrit dans EP 0.554.469 (NESTLE). La capsule est formée par un agrégat compacté d'une substance à infuser emprisonnée dans une enveloppe de conditionnement étanche à l'air et à l'eau de sorte que l'infusion puisse être réalisée à l'intérieur de la capsule. L'enveloppe de conditionnement présente une forme externe sensiblement sphérique. En outre, l'enveloppe de conditionnement est configurée pour se crever substantiellement sur n'importe quelle partie de sa surface lorsque de l'eau est injectée dans ladite capsule sous une pression de 5 à 20 bar.

Ces caractéristiques techniques impliquent que la capsule peut être crevée substantiellement sur n'importe quelle partie de sa surface, quelle que soit la position de cette dernière par rapport au dispositif de perçage et d'infusion et au dispositif de récupération de la substance infusée.

On connaît par le document DE 298.11.729.U1 (FAULHABER) ou FR 1.305.737 (AUDIBERT), des dosettes sphériques ne nécessitant aucun pré-positionnement mais dont l'enveloppe extérieure n'est pas étanche à l'air et à l'eau. De plus, l'enveloppe extérieure ne peut pas être percée en vue d'une injection d'eau sous pression. Egalement, l'enveloppe extérieure n'est pas configurée pour se crever sous l'effet de la pression substantiellement sur n'importe quelle partie de sa surface lors de l'injection d'eau dans la capsule.

Le document FR 2.879.175 (LUCIANI) décrit une dosette (et non une capsule) formée par un agrégat compacté d'une substance à infuser emprisonnée dans une enveloppe présentant une forme externe sensiblement sphérique. L'enveloppe est constituée de papier filtre du type traditionnellement utilisé pour la fabrication de sachet de thé. L'enveloppe n'est donc pas étanche à l'air et à l'eau, une infusion à l'intérieur de la dosette étant impossible. De plus, la dosette est sans protection et ne peut être conservée en l'état sans perte d'arômes et de saveurs. En outre, l'enveloppe en papier filtre fragile induit des risques d'éclatements et de déchirures de la dosette lors de sa manipulation, qui n'existent pas avec la capsule objet de l'invention.

L'enveloppe de la dosette décrite dans le document FR 2.879.175 (LUCIANI) est configurée pour éclater sous l'effort de compression appliqué par le piston de tassement. Ce n'est donc pas l'eau sous pression qui éclate l'enveloppe mais l'action mécanique du piston de tassement qui amène la dosette initialement sphérique à la bonne épaisseur de galette.

Cette dosette destinée à être utilisée spécifiquement dans une machine automatique de préparation et de distribution de boissons classique, comportant une chambre d'infusion et deux pistons :
- un premier piston pour tasser la dose de café moulu amenée par la dosette et injectée de l'eau sur ladite dose
- et, à l'opposé du premier piston, un second piston pour l'infusion de la boisson.

La dosette est écrasée par le piston de tassement dans la chambre d'infusion de manière à former une galette de café qui sera infusée. L'infusion est réalisée à l'intérieur de la chambre d'infusion et non pas à l'intérieur de la dosette car cette dernière est littéralement éclatée par le piston.

L'eau chaude est distribuée par le premier piston, puis traverse la dose de café (dosette éclatée). La boisson infusée est ensuite récupérée par le second piston.

Un autre aspect de l'invention concerne un procédé pour préparer une boisson, dans lequel :
- on perce l'enveloppe de conditionnement de la capsule conforme aux caractéristiques précédentes,
- on injecte de l'eau sous une pression de 5 à 20 bar à l'intérieur de la capsule de manière à infuser la substance contenue dans cette dernière, l'infusion étant réalisée à l'intérieur de ladite capsule,
- on récupère la boisson s'écoulant au travers de la partie de l'enveloppe de conditionnement qui a été crevée sous l'effet de la pression d'injection de l'eau.

### Présentation du dessin.

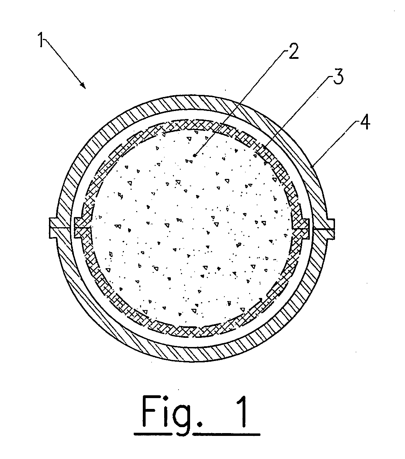

D'autres avantages et caractéristiques de l'invention apparaîtront mieux à la lecture de la description d'un mode de réalisation préféré qui va suivre, en référence au dessin annexé, réalisé à titre d'exemple indicatif et non limitatif et sur lequel la figure 1 est une vue schématique en coupe d'une capsule conforme à l'invention.

### Modes de réalisation de l'invention.

En se rapportant à la figure 1, la capsule 1 est formée par un agrégat compacté d'une substance à infuser 2 emprisonnée dans une enveloppe filtrante 3 et dans une enveloppe de conditionnement extérieure 4. La présence de l'enveloppe filtrante 3 n'est pas essentielle au fonctionnement de la capsule. La substance à infuser 2 est préférentiellement du café, mais peut être du thé, du lait en poudre, du chocolat en poudre, de la soupe, etc.

En se rapportant à la figure 1, l'enveloppe filtrante 3 est positionnée entre l'agrégat compacté de la substance à infuser 2 et l'enveloppe de conditionnement 4. Cette enveloppe filtrante 3 permet de filtrer la substance à infuser 2 quel que soit le positionnement de la capsule 1 dans la chambre d'infusion de la machine et quelle que soit la partie crevée de la capsule. De plus, l'enveloppe filtrante 3 peut jouer le rôle de barrière contre certaines agressions chimiques dues au matériau constitutif de l'enveloppe de conditionnement 4.

L'enveloppe filtrante 3 est avantageusement constituée d'un matériau poreux tissé ou non tissé, comprenant des fibres naturelles et/ou synthétiques. On pourra par exemple employer du papier ou du tissu filtrant du type employé dans la fabrication des sachets de thé.

Le volume de la capsule 1 dépend de la machine et de la substance à infuser 2. En pratique, lorsqu'elle contient du café, le diamètre de la capsule 1 est avantageusement compris entre 20 mm et 40 mm. Elle contient préférentiellement entre 5 g et 15 g de café tassé de manière à avoir une densité comprise entre 0.6 et 0.75 kg/dm³.

Conformément à l'invention, l'enveloppe de conditionnement 4 est étanche à l'air et à l'eau et présente une forme externe sensiblement sphérique pouvant être percée substantiellement sur n'importe quelle partie de sa surface. Préférentiellement, l'enveloppe de conditionnement 4 est configurée pour se crever sous l'effet de la pression substantiellement sur n'importe quelle partie de sa surface lors de l'injection d'eau dans la capsule 1. Le résultat atteint est que la capsule 1 peut être percée par le dispositif de perçage de la machine et peut se crever, quelle que soit sa position dans la chambre d'infusion.

On entend par *« substantiellement»,* le fait que certaines parties de la capsule telles que la zone réservée à une marque de fabrique, ou, comme décrit plus loin, les zones de scellement des deux demie-coquilles constitutives de ladite capsule, peuvent ne pas être parfaitement percer ou se crever compte tenue des éventuelles doubles épaisseurs.

L'enveloppe de conditionnement 4 est avantageusement en aluminium, de 20 µm à 120 µm d'épaisseur. Toutefois, d'autres matériaux étanche à l'air et à l'eau peuvent être employés comme des plastiques souples ou rigides du type polypropylène, polychlorure de vinyle, polyéthylène, plastique alimentaire, etc. Lorsque l'enveloppe de conditionnement 4 est en aluminium, il est avantageux de prévoir une pellicule de film alimentaire disposée sur la surface interne de ladite enveloppe de manière à protéger la substance à infuser 2 contre d'éventuelles agressions chimiques.

Dans une autre variante de réalisation, on peut prévoir d'utiliser initialement une dosette sphérique en papier filtre que l'on trempe dans un bain de caoutchouc alimentaire. De cette manière, tout en conservant la forme sphérique, on rajoute une couche de caoutchouc alimentaire autour de la couche de papier filtre. Cette couche de caoutchouc forme, après séchage, l'enveloppe de conditionnement étanche à l'air et à l'eau, de manière à obtenir une capsule conforme à l'invention.

En pratique, la crevaison de la capsule 1 est réalisée par l'action de la pression d'injection au niveau d'une zone de crevaison agencée dans la chambre d'infusion de la machine. Les capsules connues de l'art antérieur et en particulier celles décrites dans le document EP 0.554.469 (NESTLE), comportent une enveloppe de conditionnement qui se crève uniquement au niveau d'une zone d'affaiblissement spécifiquement prévue sur la surface de ladite enveloppe. La capsule objet de l'invention se différencie par le fait que son enveloppe de conditionnement est configurée pour se crever substantiellement sur n'importe quelle partie de sa surface lorsque de l'eau est injectée dans ladite capsule sous une pression de 5 à 20 bar.

La pression à laquelle est infusée la boisson détermine la qualité de cette dernière. En pratique, plus la pression est élevée, plus la boisson infusée est de qualité. Il est possible de jouer sur l'épaisseur de l'enveloppe de conditionnement 4 pour obtenir différents types de capsules associées à différentes qualités de boisson.

On pourra par exemple prévoir un premier type de capsule ayant une enveloppe de conditionnement de faible épaisseur (par exemple 20 µm) destinée à se crever sous une faible pression (par exemple 5 bar) et susceptible de générer une boisson de qualité convenable. On obtiendra par exemple un breuvage à base de café pour petit-déjeuner à l'américaine, c'est-à-dire un café beaucoup moins travaillé et beaucoup moins fort qu'un expresso mais en conservant la technique dite « expresso ».

On pourra également prévoir un second type de capsule ayant une enveloppe de conditionnement d'épaisseur intermédiaire (par exemple 50 µm) destinée à se crever sous une pression moyenne (par exemple 10 bar) et susceptible de générer une boisson de qualité supérieure, type « expresso à la française ».

On pourra enfin prévoir un troisième type de capsule ayant une enveloppe de conditionnement de forte épaisseur (par exemple 120 µm) destinée à se crever sous une pression élevée (par exemple 20 bar) et susceptible de générer une boisson de haute qualité, type « expresso à l'italienne » (plus fort que « l'expresso à la française »).

Le procédé de fabrication de capsule 1 sphérique est bien connu de l'homme du métier et par exemple décrit dans le document FR 2.879.175 (LUCIANI).

L'enveloppe filtrante 3 est avantageusement formée par deux demi-enveloppes de matériau filtrant scellées l'une à l'autre le long de leur rebord périphérique de manière à ce qu'elles ne puissent pas se rompre lors de l'injection d'eau sous pression dans ladite capsule. De même, l'enveloppe de conditionnement 4 est avantageusement formée par deux demi-enveloppes de matériau étanche à l'air et à l'eau scellées l'une à l'autre le long de leur rebord périphérique de manière à ce qu'elles puissent être crevées et éventuellement se crever lors de l'injection d'eau sous pression dans ladite capsule. Dans une variante de réalisation, les deux demi-enveloppes de l'enveloppe de conditionnement 4 sont soudées l'une à l'autre par ultrason. Dans une autre variante de réalisation, elles sont scellées l'une à l'autre par insertion et encliquetage de leur rebord l'un sur l'autre de la même façon que certaines gélules médicamenteuses.

Le procédé pour préparer une boisson à partir de la capsule 1 précédemment décrite est alors très simple. Il suffit de percer l'enveloppe de conditionnement 4 de la capsule 1 et injecter de l'eau sous une pression de 5 à 20 bar à l'intérieur de ladite capsule de manière à infuser la substance 2 contenue dans cette dernière. Grâce à l'enveloppe de conditionnement 4 qui est étanche à l'air et à l'eau, l'infusion est réalisée à l'intérieur de la capsule1. On récupère alors la boisson s'écoulant au travers de la partie de l'enveloppe de conditionnement 4 qui a été crevée sous l'effet de la pression d'injection de l'eau ou qui a été préalablement percée.

La capsule 1 conforme à l'invention est destinée à être utilisée dans une machine de préparation et de distribution automatique de boisson du type comportant un dispositif pour percer ladite capsule et injecter de l'eau sous pression à l'intérieur de cette dernière. De telles machines sont par exemple décrites dans les documents EP 0.242.556 (NESTLE) ou EP 1.295.554 (SGL ITALIA).

## Revendications

1. Capsule (1) destinée à être utilisée dans une machine de préparation et de distribution automatique de boissons, ladite capsule (1) étant formée par un agrégat compacté d'une substance à infuser (2) emprisonnée dans une enveloppe de conditionnement (4) étanche à l'air et à l'eau de sorte que l'infusion puisse être réalisée à l'intérieur de ladite capsule (1) **se caractérisant par le fait que** ladite enveloppe de conditionnement (4) présente une forme externe sensiblement sphérique, **et par le fait que** ladite enveloppe de conditionnement (4) est configurée pour se crever substantiellement sur n'importe quelle partie de sa surface lorsque de l'eau est injectée dans ladite capsule (1) sous une pression de 5 à 20 bar.

2. Capsule selon la revendication 1, dans laquelle l'enveloppe de conditionnement (4) est en aluminium, de 20 µm à 120 µm d'épaisseur.

3. Capsule selon la revendication 2, dans laquelle une pellicule de film alimentaire est disposée sur la surface interne de l'enveloppe de conditionnement (4) de manière à protéger la substance à infuser (2) contre d'éventuelles agressions chimiques.

4. Capsule selon la revendication 1, dans laquelle l'enveloppe de conditionnement (4) est en plastique souple ou rigide étanche à l'air et à l'eau du type polypropylène, polychlorure de vinyle, polyéthylène, plastique alimentaire.

5. Capsule selon l'une des revendications précédentes, dans laquelle l'enveloppe de conditionnement (4) est formée par deux demi-enveloppes de matériau étanche à l'air et à l'eau scellées l'une à l'autre le long de leur rebord périphérique de manière à ce qu'elles puissent être crevées et se crever lors de l'injection d'eau sous pression dans ladite capsule (1).

6. Capsule selon l'une des revendications 1 à 4, dans laquelle l'enveloppe de conditionnement (4) est formée par deux demi-enveloppes de matériau étanche à l'air et à l'eau soudées l'une à l'autre par ultrason.

7. Capsule selon l'une des revendications 1 à 4, dans laquelle l'enveloppe de conditionnement (4) est formée par deux demi-enveloppes de matériau étanche à l'air et à l'eau scellées l'une à l'autre par insertion et encliquetage de leur rebord l'un sur l'autre.

8. Capsule selon l'une des revendications précédentes, dans laquelle une enveloppe filtrante (3) emprisonne l'agrégat compacté de la substance à infuser (2).

9. Capsule selon la revendication 8, dans laquelle l'enveloppe filtrante (3) est constituée d'un matériau poreux tissé ou non tissé, comprenant des fibres naturelles et/ou synthétiques.

10. Capsule selon l'une des revendications 8 ou 9, dans laquelle l'enveloppe filtrante (3) est formée par deux demi-enveloppes de matériau filtrant scellées l'une à l'autre le long de leur rebord périphérique de manière à ce qu'elles ne puissent pas se rompre lors de l'injection d'eau sous pression dans ladite capsule (1).

11. Capsule selon la revendication 1, dans laquelle l'enveloppe de conditionnement (4) est une couche de caoutchouc alimentaire étanche à l'air et à l'eau.

12. Procédé pour préparer une boisson, **se caractérisant par le fait que**:
- on perce l'enveloppe de conditionnement (4) de la capsule (1) conforme aux revendications précédentes,
- on injecte de l'eau sous une pression de 5 à 20 bar à l'intérieur de la capsule (1) de manière à infuser la substance (2) contenue dans cette dernière, l'infusion étant réalisée à l'intérieur de ladite capsule (1),
- on récupère la boisson s'écoulant au travers de la partie de l'enveloppe de conditionnement (4) qui a été crevée sous l'effet de la pression d'injection de l'eau.

## Patentansprüche

1. Kapsel (1) für die Verwendung in einer Maschine zur automatischen Zubereitung und Ausgabe von Getränken, wobei die besagte Kapsel (1) aus einem verdichteten Stoff einer für den Aufguss bestimmten Substanz (2) gebildet wird, die von einer luft- und wasserdichten Umhüllung (4) umschlossen wird, so dass der Aufguss im Inneren der besagten Kapsel (1) erfolgt, die **dadurch gekennzeichnet ist, dass** die besagte Umhüllung (4) eine im Wesentlichen kugelförmige äußere Form aufweist, und dadurch, dass die besagte Umhüllung (4) so beschaffen ist, dass sie grundlegend an jeder beliebigen Stelle ihrer Oberfläche aufplatzen kann, wenn Wasser mit einem Druck von 5 bis 20 bar in die besagte Kapsel (1) gespritzt wird.

2. Kapsel nach Anspruch 1, in welcher die Umhüllung (4) aus 20 µm bis 120 µm starkem Aluminium.

3. Kapsel nach Anspruch 2, in welcher eine dünne Schicht Lebensmittelfolie auf die innere Fläche der Umhüllung (4) aufgebracht wird, so dass die für den Aufguss bestimmte Substanz (2) gegen eventuelle chemische Aggressionen geschützt ist.

4. Kapsel nach Anspruch 1, in welcher die Umhüllung (4) aus weichem oder hartem, luft- und wasserdichtem Kunststoff vom Typ Polypropylen, Polyvinylchlorid, Polyethylen, Lebensmittelkunststoff ist.

5. Kapsel nach einem der zuvor genannten Ansprüche, in welcher die Umhüllung (4) aus zwei halben Hüllen aus luft- und wasserdichtem Material gebildet wird, die entlang ihres runden Randes gegeneinander verschweißt sind, so dass sie, wenn Wasser unter Druck in die besagte Kapsel (1) spritzt, aufplatzen können.

6. Kapsel nach einem der Ansprüche 1 bis 4, deren Umhüllung (4) aus zwei halben Hüllen aus luft- und wasserdichtem Material gebildet wird, die mittels Ultraschall gegeneinander verschweißt wurden.

7. Kapsel nach einem der Ansprüche 1 bis 4, deren Umhüllung (4) aus zwei halben Hüllen aus luft- und wasserdichtem Material gebildet wird, die durch Ineinanderschieben und Einrasten des einen Randes über den anderen fest miteinander verbunden sind.

8. Kapsel nach einem der zuvor genannten Ansprüche, in welcher eine filtrierende Umhüllung (3) den verdichteten Stoff der zum Aufguss bestimmten Substanz (2) umschließt.

9. Kapsel nach Anspruch 8, in welcher die filtrierende Umhüllung (3) aus einem durchlässigen Material, gewebt oder aus Vlies, aus natürlichen und/oder synthetischen Fasern bestehend, gebildet wird.

10. Kapsel nach einem der Ansprüche 8 oder 9, in welcher die filtrierende Umhüllung (3) aus zwei halben Hüllen aus filtrierendem Material gebildet wird, die entlang ihres runden Randes derartig miteinander verbunden sind, dass sie nicht auseinanderreißen können, wenn Wasser unter Druck in die besagte Kapsel (1) gespritzt wird.

11. Kapsel nach Anspruch 1, in welcher die Umhüllung (4) eine Schicht aus luft- und wasserdichtem Lebensmittelgummi ist.

12. Verfahren zur Zubereitung eines Getränks, **dadurch gekennzeichnet,**
**dass**:
- man die Umhüllung (4) der Kapsel (1) gemäß der vorhergehenden Ansprüche durchbricht,
- man Wasser mit einem Druck von 5 bis 20 bar in das Innere der Kapsel (1) spritzt, so dass die in der Kapsel (1) enthaltene Substanz (2) ziehen kann, wobei der Aufguss im Inneren der genannten Kapsel (1) erfolgt,
- man das Getränk auffängt, das durch den Teil der Umhüllung (4) fließt, der durch die Druckwirkung des eingespritzten Wassers geplatzt ist.

## Claims

1. Capsule (1) designed to be used in an automatic beverage machine, said capsule (1) being made up of a compacted aggregate of a substance to be brewed (2) imprisoned in an air-tight and water-tight packaging envelope (4) in such a way as for the brewing to be carried out inside said capsule (1) **characterized by** the fact that the packaging envelope (4) is noticeably spherical, and by the fact that said packaging envelope (4) is configured to perforate substantially on any part of its surface when water is injected into said capsule(1) under a pressure of 5 to 20 bar.

2. Capsule according to claim 1, in which the packaging envelope (4) is made of aluminium between 20 µm to 120 µm thick.

3. Capsule according to claim 2, in which a layer of food-grade plastic is laid on the inner surface of the packaging envelope (4) in such a way as to protect the substance to be brewed (2) from possible chemical aggression.

4. Capsule according to claim 1, in which the packaging envelope (4) is made of supple or rigid air-tight and water-tight polypropylene, polyvinyl chloride or food-grade plastic.

5. Capsule according to one of above claims, in which the packaging envelope (4) is formed by two half-envelopes of air-tight and water-tight material bonded together along their peripheral edge so that they can be punctured and puncture when water is injected under pressure into said capsule (1).

6. Capsule according to one of claims 1 to 4, in which the packaging envelope (4) is formed by two half-envelopes of air-tight and water-tight material and welded together by ultrasound welding.

7. Capsule according to one of claims 1 to 4, in which the packaging envelope (4) is formed by two half-envelopes of air-tight and water-tight material and bonded by snap-fitting their flanges together.

8. Capsule according to one of claims 1 to 4, in which the filtering envelope (3) imprisons the compacted aggregate of the substance to be brewed.

9. Capsule according to claim 8, in which the filtering envelope (3) is made up of a porous woven or non-woven material which may made from natural and/or synthetic fibre.

10. Capsule according to one of claims 8 or 9, in which the filtering envelope (3) is formed by two half-envelopes of filtering material bonded together along their peripheral edge so that they cannot rupture during the injection of water under pressure into said capsule (1).

11. Capsule according to claim 1, in which the packaging envelope (4) is a layer of water-tight and air-tight food-grade rubber.

12. Process for preparing a beverage, **characterized by** the fact that :
- The packaging envelope (4) of the capsule (1) is perforated according to previous claims,
- Water is injected under a pressure of 5 to 20 bar into the capsule (1) in such a way as to brew the substance (2) contained in the latter, the brewing being carried out inside said capsule (1),
- The beverage is retrieved as it drips through the packaging envelope (4) which has been perforated under the effect of the pressure of the injected water.
